# EUROPÄISCHE PATENTSCHRIFT

(11) **EP 0 541 539 B1**
(45) Veröffentlichungstag und Bekanntmachung des Hinweises auf die Patenterteilung: **14.12.1994**
(21) Anmeldenummer: 90914535.1
(22) Anmeldetag: 17.09.1990
(51) Int. Cl.: C09D 5/00, C09D 5/20

(54) **WÄSSRIGES LACKOVERSPRAY-SCHUTZCOATING FÜR SPRITZKABINEN SOWIE VERFAHREN ZU DESSEN HERSTELLUNG**
AQUEOUS COATING FOR PROTECTING SPRAY CABINS FROM ENAMEL OVERSPRAY AND PROCESS FOR PRODUCING IT
REVETEMENT AQUEUX POUR PROTEGER DES CABINES DE PISTOLAGE CONTRE LES EXCEDENTS DE LAQUE ET PROCEDE POUR SA FABRICATION

(30) Priorität: 25.09.1989 DE 3931907
(43) Veröffentlichungstag der Anmeldung: 19.05.1993
(73) Patentinhaber: Henkel Kommanditgesellschaft auf Aktien, 40191 Düsseldorf (DE)
(72) Erfinder: GEKE, Jürgen, Dr., D-4000 Düsseldorf 1 (DE); ZANGE, Bernhard, D-5222 Morsbach-Birken (DE); REHM, Hans, Jörgen, D-4010 Hilden (DE); FEHR, Hans, D-4000 Düsseldorf 13 (DE); MOLZ, Thomas, Dr., D-4010 Hilden (DE); BUICK, Kurt, D-4040 Neuss 1 (DE); BRÜGEL, Emil, D-4048 Grevenbroich (DE); HÜSEMANN, Lutz, Dr., D-5657 Haan (DE)
(86) Internationale Anmeldenummer: EP9001570
(87) Internationale Veröffentlichungsnummer: WO9104303

(56) Entgegenhaltungen:
- US-A- 2 563 499
- US-A- 3 455 712
- US-A- 3 476 575

## Beschreibung

Die Erfindung betrifft ein wäßriges, reversibles und lagerstabiles Lackoverspray-Schutzcoating für Spritzkabinen sowie ein Verfahren zu dessen Herstellung.

Der bei Lackierprozessen auftretende Lackoverspray in Spritzkabinen lagert sich auf allen Flächen der Innenseite der Kabine ab. Besonders davon betroffen sind Böden, Gitterroste, Leitungen sowie Geräte. Um die Entfernung der sich darauf bildenden Lackschichten zu erleichtern, werden die betroffenen Flächen in vielen Fällen vorher mit Schutzcoatings überzogen, die sich durch mehr oder weniger gute Ablöseeigenschaften auszeichnen. Die Ablösung der Schutzcoating-/Lack-Schichten erfolgte bisher durch Abspritzen mit warmem oder heißem Wasser, durch Ablösen mit Lösungsmitteln oder durch mechanische Behandlung. Neben der Ablösbarkeit bestehen als weitere Anforderungen an Schutzcoatings, daß sie nicht gefärbt, nicht lichtabsorbierend, sondern eher reflektierend sind.

US-A-2,563,499 beschreibt ein Schutzcoating, welches zusammen mit dem anhaftenden Lackoverspray nur mit warmem oder heißem Wasser entfernt werden kann. Das Schutzcoating wurde aus einer wäßrigen Suspension eines Farbpigments und einem kolloidalen Ton sowie einer Emulsion eines Paraffin-Wachses hergestellt. Als Emulgator wurde Oleinsäure/Triethanolamin oder gemischtes Polyether-Sorbitanmonopalmitat eingesetzt.

US-A-3,476,575 beschreibt ein Schutzcoating, welches aus einer wäßrigen Emulsion eines Terpenkohlenwasserstoff-Polymers, einem Öl, Wachs, einem Fettsäuresalz als Emulgator sowie einem Farbpigment besteht. Des weiteren können neben weiteren üblichen Zusatzstoffen Füllstoffe, Eindickungsmittel, Konservierungsmittel und Antioxidanzien enthalten sein. Auch dieses Schutzcoating läßt sich in optimaler Weise nur mit heißem Wasser oder Dampf entfernen.

Durch die Verwendung von Lösungsmitteln, Ölen und Wachsen in der Schutzcoating-Masse kommt es nach der Entsorgung im Koagulationsumlaufwasser zu einer starken Beeinträchtigung des Koagulationseffektes. Große Mengen an Lösungsmitteln werden nicht aufgefangen, sondern gelangen ins Umlaufwasser der Koagulationswässer. Des weiteren führt die Verwendung von Emulgatoren zu Schaumbildung.

Der Erfindung liegt die Aufgabe zugrunde, ein lagerstabiles Lackoverspray-Schutzcoating bereitzustellen, welches nach der Verwendung leicht mit kaltem Wasser von behandelten Oberflächen entfernbar ist, welches lösungsmittel- und ölfrei ist und keine Emulgatoren enthält. Die Formulierungskomponenten sollen zu keiner Emulsionsbildung mit Lackinhaltsstoffen führen und dadurch zu einer separaten Abwasserproblematik, z.B. zu Emulsionsspaltungen führen. Die Aufgabe soll zudem gelöst werden durch Verwendung von ökologisch und toxikologisch, insbesondere aquatisch unbedenklichen Formulierungen und biologisch abbaubaren Substanzen.

Die Aufgabe wurde erfindungsgemäß gelöst durch ein wäßriges, reversibles und lagerstabiles Lackoverspray-Schutzcoating für Spritzkabinen, das dadurch gekennzeichnet ist, daß dieses Gemisch
- 10 bis 80 Gew.-% einer C₈-Carbonsäure und/oder das Alkalimetallsalz einer C₈-Carbonsäure,
- 1 bis 40 Gew.-% eines pH-Regulators, bestehend aus Alkanolaminen und/oder Alkalimetallhydroxiden,
- 3 bis 15 Gew.-% eines Schichtsilikates und/oder Polyacrylats und/oder Carboxymethylcellulose,
- als Rest Wasser
   sowie gegebenenfalls übliche Zusatzstoffe enthält, einen pH-Wert von 6 bis 10 und eine Viskosität von 30 bis 50 DIN-sec besitzt.

Als Vertreter der C₈-Carbonsäuren ist insbesondere die 2-Ethylhexansäure zu nennen, welche vorzugsweise in einem Anteil von 10 bis 25 Gew.-% eingesetzt wird. Die Natrium- oder Kaliumsalze dieser Säure können ebenfalls allein oder im Gemisch mit der Säure eingesetzt werden.

Als pH-Regulator wird bevorzugt Monoethanolamin und/oder Triethanolamin allein oder im Gemisch mit Natriumhydroxid oder Kaliumhydroxid eingesetzt. Alkanolamin-freie Formulierungen sind gleichfalls möglich, indem man den pH-Wert durch Alkalimetallhydroxid kontrolliert.

Als Thixotropie- und/oder Verdickungsmittel werden Schichtsilikate, vorzugsweise Bentonite, Hectorite, Laponite oder Saponite eingesetzt. Anstelle oder im Gemisch mit den Schichtsilikaten können auch Polyacrylate und/oder Carboxymethylcellulose verwendet werden. Diese Komponenten werden vorzugsweise in einem Anteil von 3 bis 8 Gew.-% eingesetzt.

Bei speziellen Anforderungen können weitere Komponenten zugegeben werden. Dabei handelt es sich insbesondere um hydrophobierende Trennmittel, Fließverbesserer, Farbpigmente und Korrosionsinhibitoren.

Als hydrophobierende Trennmittel werden Glycerinester, vorzugsweise Glycerinmonooleat, und/oder Metallseifen, vorzugsweise Calciumstearat, in einem Anteil von 0 bis 20 Gew.-%, insbesondere 1 bis 20 Gew.-%, eingesetzt.

Als Fließverbesserer können mehrwertige Alkohole, vorzugsweise Glycerin oder Ethylenglycol, in Mengen von 0 bis 20 Gew.-%, insbesondere 1 bis 20 Gew.-%, eingesetzt werden.

Als Farbpigment ist vorzugsweise Titandioxid in Anteilen von 0 bis 5 Gew.-%, insbesondere 1 bis 5 Gew.-%, geeignet.

Als Korrosionsinhibitoren für Bunt- und Eisenmetalle werden vorzugsweise Alkanolamine, Tolyltriazol oder Natrium- oder Kaliumsalze von C₈-C₁₈-Carbonsäuren (Fettsäuren) in Anteilen von 0 bis 10 Gew.-%, insbesondere 1 bis 10 Gew.-%, eingesetzt.

Die Anwendung der erfindungsgemäßen Formulierungen erfolgt als Konzentrat ohne weitere Verdünnung mit Wasser, die Applikation wird mittels geeigneter Auftragsgeräte, z.B. Pumpen, durchgeführt. Die pH-Werte der Gesamtformulierungen liegen zwischen 6 und 10, vorzugsweise zwischen 7 und 8; die Viskositätswerte (nach DIN 53 211) liegen zwischen 30 und 50 DIN-sec, bevorzugt jedoch zwischen 35 und 40 DIN-sec.

Die Erfindung betrifft weiterhin ein Verfahren zur Herstellung von lagerstabilen, homogenen Formulierungen, welches erfindungsgemäß dadurch erfolgt, daß das Schichtsilikat (z.B. Bentonit) sowie gegebenenfalls das Pigment in Wasser eingerührt und anschließend einem hohen Schergefälle ausgesetzt wird. Geeignete Geräte zur Erzeugung eines hohen Schergefälles sind beispielsweise Cavitron- oder Supraton- oder vergleichbare Apparaturen. An diesen Homogenisierungsschritt schließt sich eine mindestens zweistündige, vorzugsweise zwei- bis dreistündige Quell- oder Reifezeit an. Zu diesem Gemisch wird dann die wäßrige Lösung der mit dem pH-Regulator (z.B. Triethanolamin) neutralisierten C₈-Carbonsäure (z.B. 2-Ethylhexansäure) eingerührt und nach Zugabe weiterer Komponenten, die gegebenenfalls eingesetzt werden können, erneut einem starken Schergefälle ausgesetzt und homogenisiert.

Vergleichende Herstellversuche mit vom erfindungsgemäßen Verfahren abweichenden Vorgehensweisen erbrachten schlechtere Ergebnisse hinsichtlich Homogenität, Lagerstabilität und Thixotropie.

### Beispiele:

1. 20 Gew.-% Monoethanolamin
   10 Gew.-% Calciumstearat
   10 Gew.-% Glycerinmonooleat
   5 Gew.-% Bentonit
   10 Gew.-% 2-Ethylhexansäure
   45 Gew.-% Wasser
2. 15 Gew.-% Triethanolamin
   10 Gew.-% Glycerin
   5 Gew.-% Bentonit
   1 Gew.-% Titandioxid
   10 Gew.-% Glycerinmonooleat
   20 Gew.-% 2-Ethylhexansäure
   39 Gew.-% Wasser
3. 10 Gew.-% Natriumhydroxid
   10 Gew.-% Calciumstearat
   10 Gew.-% Glycerinmonooleat
   5 Gew.-% Bentonit
   10 Gew.-% 2-Ethylhexansäure
   55 Gew.-% Wasser

## Patentansprüche

1. Wäßriges, reversibles und lagerstabiles Lackoverspray-Schutzcoating für Spritzkabinen, dadurch gekennzeichnet, daß dieses Gemisch
- 10 bis 80 Gew.-% einer C₈-Carbonsäure und/oder das Alkalimetallsalz einer C₈-Carbonsäure,
- 1 bis 40 Gew.-% eines pH-Regulators, bestehend aus Alkanolaminen und/oder Alkalimetallhydroxiden,
- 3 bis 15 Gew.-% eines Schichtsilikates und/oder Polyacrylats und/oder Carboxymethylcellulose,
- als Rest Wasser sowie gegebenenfalls übliche Zusatzstoffe enthält, einen pH-Wert von 6 bis 10 und eine Viskosität von 30 bis 50 DIN-sec besitzt.

2. Lackoverspray-Schutzcoating nach Anspruch 1, dadurch gekennzeichnet, daß als C₈-Carbonsäure 2-Ethylhexansäure oder deren Natrium- oder Kaliumsalz in einem Anteil von 10 bis 25 Gew.-% eingesetzt wird.

3. Lackoverspray-Schutzcoating nach Ansprüchen 1 bis 2, dadurch gekennzeichnet, daß als pH-Regulator Monoethanolamin und/oder Triethanolamin und/oder Natrium- oder Kaliumhydroxid eingesetzt wird.

4. Lackoverspray-Schutzcoating nach Ansprüchen 1 bis 3, dadurch gekennzeichnet, daß das Schichtsilikat und/oder Polyacrylat und/ oder Carboxymethylcellulose in einem Anteil von 3 bis 8 Gew.-% und als Schichtsilikat Bentonite, Hectorite, Laponite oder Saponite eingesetzt werden.

5. Lackoverspray-Schutzcoating nach Ansprüchen 1 bis 4, dadurch gekennzeichnet, daß als Zusatzstoff Glycerinester, insbesondere Glycerinmonooleat, und/oder Metallseifen, insbesondere Calciumstearat, in einem Anteil von 0 bis 20 Gew.-% eingesetzt wird.

6. Lackoverspray-Schutzcoating nach Ansprüchen 1 bis 5, dadurch gekennzeichnet, daß als Zusatzstoff ein mehrwertiger Alkohol, insbesondere Glycerin oder Ethylenglycol, in einem Anteil von 0 bis 20 Gew.-% eingesetzt wird.

7. Lackoverspray-Schutzcoating nach Ansprüchen 1 bis 6, dadurch gekennzeichnet, daß als Zusatzstoff ein Farbpigment, insbesondere Titandioxid, in einem Anteil von 0 bis 5 Gew.-% enthalten ist.

8. Lackoverspray-Schutzcoating nach Ansprüchen 1 bis 7, dadurch gekennzeichnet, daß als Zusatzstoff ein Alkanolamin, Tolyltriazol oder Natrium- oder Kaliumsalze einer C₈-C₁₈-Carbonsäure in einem Anteil von 0 bis 10 Gew.-% enthalten ist.

9. Lackoverspray-Schutzcoating nach Anspruch 1 bis 8, dadurch gekennzeichnet, daß der pH-Wert zwischen 7 und 8 beträgt.

10. Lackoverspray-Schutzcoating Ansprüchen 1 bis 9, dadurch gekennzeichnet, daß die Viskosität zwischen 35 und 40 DIN-sec liegt.

11. Verfahren zur Herstellung eines wäßrigen, reversiblen und lagerstabilen Lackoverspray-Schutzcoatings, dadurch gekennzeichnet, daß in einem ersten Schritt
3 bis 15 Gew.-% eines Schichtsilikates und/oder Polyacrylates und/oder Carboxymethylcellulose
sowie gegebenenfalls enthaltene Pigmente mit Wasser gemischt und einem hohen Schergefälle ausgesetzt werden, anschließend in dieses Gemisch nach mindestens 2 Stunden Quellzeit ein in einem zweiten Schritt hergestelltes wäßriges Gemisch, das aus
1 bis 40 Gew.-% eines pH-Regulators, bestehend aus Alkanolaminen und/oder Alkalihydroxiden und
10 bis 80 Gew.-% einer C₈-Carbonsäure und/oder dem Metallsalz einer C₈-Carbonsäure
sowie gegebenenfalls üblichen Zusatzstoffen besteht, zugegeben und erneut einem hohen Schergefälle ausgesetzt wird.

## Claims

1. Aqueous, reversible and storage-stable paint-overspray protective coating for spray booths, characterized in that this mixture contains
- 10 to 80 % by weight of a C₈-carboxylic acid and/or the alkaline-metal salt of a C₈-carboxylic acid,
- 1 to 40 % by weight of a pH-regulator, consisting of alkanolamines and/or alkaline-metal hydroxides,
- 3 to 15 % by weight of a layered silicate and/or polyacrylate and/or carboxymethylcellulose,
- as the reminder, water and also where appropriate the usual additives, has a pH value of 6 to 10 and a viscosity of 30 to 50 DIN-sec.

2. Paint-overspray protective coating according to claim 1, characterized in that 2-ethylhexanoic acid or its sodium or potassium salt is used as the C₈-carboxylic acid in a proportion of 10 to 25 % weight.

3. Paint-overspray protective coating according to claims 1 and 2, characterized in that monoethanolamine and/or triethanolamine and/or sodium hide or potassium hydroxide is used as the pH-regulator.

4. Paint-overspray protective coating according to claims 1 to 3, characterized in that the layered silicate and/or polyacrylate and/or carboxymethylcellulose are used in a proportion of 3 to 8 % by weight, and that bentonites, hectorites, laponites or saponites are used as the layered silicate.

5. Paint-overspray protective coating according to claims 1 to 4, characterized in that glycerine esters, in particular glycerine mono-oleate, and/or metallic soaps, in particular calcium stearate, are used as additives in a proportion of 0 to 20 % by weight.

6. Paint-overspray protective coating according to claims 1 to 5, characterized in that a polyhydric alcohol, in particular glycerine or ethylene glycol, is used as an additive in a proportion of 0 to 20 % by weight.

7. Paint-overspray protective coating according to claims 1 to 6, characterized in that it contains a coloring pigment, in particular titanium dioxide, in a proportion of 0 to 5 % by weight as an additive.

8. Paint-overspray protective coating according to claims 1 to 7, characterized in that it contains an alkanolamine, tolyl triazole or sodium salts or potassium salts of a C₈-C₁₈-carboxylic acid in a proportion of 0 to 10 % by weight as an additive.

9. Paint-overspray protective coating according to claim 1 to 8, characterized in that the pH value is between 7 and 8.

10. Paint-overspray protective coating according to claims 1 to 9, characterized in that the viscosity lies between 35 and 40 DIN-sec.

11. Process for the production of an aqueous, reversible and storage-stable paint-overspray protective coating, characterized in that in a first stage
3 to 15 % by weight of a layered silicate and/or polyacrylate and/or carboxymethylcellulose
and pigments, contained where appropriate, are mixed with water and exposed to a high shear gradient, then after at least 2 hours swelling-time, one adds to this mixture an aqueous mixture produced in a second stage which consists of
1 to 40 % by weight of a pH-regulator, consisting of alkanolamines and/or alkali hydroxides and
10 to 80 % by weight of a C₈-carboxylic acid and/or the metallic salt of a C₈-carboxylic acid
and optionally the usual additives, and is again exposed to a high shear gradient.

## Revendications

1. Revêtement aqueux, réversible et stable au stockage pour protéger les cabines de pistolage des excédents de'laque, de vernis ou de peinture, qui est caractérisé en ce que ce mélange renferme
- 10 à 80 % en poids d'un acide carboxylique en C₈ et/ou le sel de métal alcalin d'un acide carboxylique en C₈,
- 1 à 40 % on poids d'un régulateur de pH, constitué d'alcanolamines et/ou d'hydroxydes de métaux alcalins,
- 3 à 15 % en poids d'un silicate stratifié et/ou d'un polyacrylate et/ou d'une carboxyméthylcellulose, - pour le reste de l'eau ainsi que, le cas échéant, des additifs usuels, qui possède un pH de 6 à 10 et une viscosité de 30 à 50 DIN-sec.

2. Revêtement pour protéger des excédents de laque selon la revendication 1, caractérisé en ce que l'on met en oeuvre comme acide carboxylique en C₈, de l'acide 2-éthylhexanoïque ou son sel de sodium ou de potassium, dans une proportion de 10 à 25 % en poids.

3. Revêtement pour protéger des excédents de laque selon les revendications 1 à 2, caractérisé en ce que l'on utilise comme régulateur de pH, de la monoéthanolamine et/ou de la triéthanolamine et/ou de l'hydroxyde de sodium ou de potassium.

4. Revêtement pour protéger des excédents de laque selon les revendications 1 à 3, caractérisé en ce que le silicate stratifié et/ou le polyacrylate et/ou la carboxyméthylcellulose sont mis en oeuvre en proportion de 3 à 8 % en poids et en ce que l'on emploie comme silicate stratifié, de la bentonite, de l'hectorite, de la loponite ou de la saponite.

5. Revêtement pour protéger des excédents de laque selon les revendications 1 à 4, caractérisé en ce que l'on met en oeuvre comme additif, de l'ester de glycérine, en particulier du monooléate de glycérine et/ou des savons métallique, en particulier du stéarate de calcium, dans une proportion de 0 à 20 % en poids,

6. Revêtement pour protéger des excédents de laque selon les revendications 1 à 5, caractérisé en ce que l'on utilise comme additif, un polyalcool, en particulier de la glycérine ou de l'éthylèneglycol, dans une proportion de 0 à 20 % en poids.

7. Revêtement pour protéger des excédents de laque selon les revendications 1 à 6, caractérisé en ce qu'il contient comme additif, un pigment colorant, en particulier du dioxyde de titane, dans une proportion de 0 à 5 % en poids.

8. Revêtement pour protéger des excédents de laque selon les revendications 1 à 7, caractérisé en ce qu'il contient comme additif, une alcanolamine, du tolyltriazol ou des sels de sodium ou de potassium d'un acide en C₈ à C₁₈ dans une proportion de 0 à 10 % en poids.

9. Revêtement pour protéger des excédents de laque selon les revendications 1 à 8, caractérisé en ce que le pH est compris entre 7 et 8.

10. Revêtement pour protéger des excédents de laque selon les revendications 1 à 9, caractérisé en ce que la viscosité se situe entre 35 et 40 DIN-sec.

11. Procédé de préparation d'un revêtement aqueux, réversible et stable au stockage pour protéger des excédents de laque, de vernis ou de peinture, caractérisé en ce que dans une première étape.
3 à 15 % en poids d'un silicate stratifié et/ou de polyacrylate et/ou de carboxyméthylcellulose ainsi que des pigments éventuellement contenue sont mélangés avec de l'eau et exposés à une force de cisaillement élevée, puis que l'on ajoute à ce mélange, après une période de gonflement d'au moins 2 heures, un mélange aqueux préparé au cours d'une seconde étape, qui est constitué de
1 à 40 % en poids d'un régulateur de pH, constitué d'alcanolamines et/ou d'hydroxydes de métaux alcalins et
10 a 80 % en poids d'un acide carboxylique en C₈ et/ou du sel métallique d'un acide carboxylique en C₈
ainsi que le cas échéant, d'additifs usuels, et que l'on expose ensuite à nouveau la préparation à une force de cisaillement élevée.
